# EUROPEAN PATENT SPECIFICATION

(11) **EP 2 007 958 B1**
(45) Date of publication and mention of the grant of the patent: **10.03.2010**
(21) Application number: 07732325.1
(22) Date of filing: 03.04.2007
(51) Int. Cl.: E05F 3/10, E05F 3/00

(54) **DOOR CLOSER**
TÜRSCHLIESSER
FERME-PORTE

(30) Priority: 03.04.2006 GB 0606677; 23.01.2007 GB 0701263
(43) Date of publication of application: 31.12.2008
(73) Proprietor: Astra Door Controls Ltd, Preston, Lancashire PR2 5AP (GB)
(72) Inventor: REID, Alister, Peter, Preston PR2 5AP (GB); HESKETH, Mark, Richard, Leeds LS17 0BT (GB)
(74) Representative: Jenkins, Peter David
(86) International application number: PCT/GB2007/001281
(87) International publication number: WO 2007/113576

(56) References cited:
- EP-A1- 0 332 426
- WO-A-2005/124079
- GB-A- 1 263 666
- US-A- 3 343 203

## Description

This invention relates to a door closer, and in particular to a door closer known in the art as a concealed door closer which is mortised into the door leaf or its frame. The invention also relates to a fitting tool for such a door closer. The invention further relates to a kit of parts comprising a door closer and a fitting tool for the door closer.

Door closers are known in a wide variety of forms.

The most common type of door closer is know in the art as a face fixed overhead closer which includes a housing, incorporating a spring and a hydraulic damper arrangement, for fitting to the face of a door, on the pull side or the push side, and an articulated arm which is secured to the door frame. Alternatively, the housing can be mounted on the transom of the door frame on either the push side or pull side of the door, and the arm affixed to the door. The face fixed overhead closer can readily be made adjustable because the housing containing the spring and damper arrangement is at all times accessible. Also, the performance of the door closer with regard to the closing moment applied to the door and the closing time is acceptable.

However, this type of door closer suffers from a serious commercial disadvantage in that the design is not entirely acceptable for use in domestic premises for aesthetic reasons because both the housing and the arm are exposed to view. Also, the housing and the arm need to be fitted to exposed parts of the door face and frame, and this can be disadvantageous, particularly for antique, period or valuable doors. Finally, the exposed parts of the housing and the arm need to be cleaned regularly, which is inconvenient.

Concealed door closers are known which are adapted to be inserted into the hanging edge of the door leaf and are anchored to the frame edge by means of a linkage, for example a chain or a rigid arm. Such door closers incorporate a spring to provide a closing force for closing the door and a hydraulic damping arrangement which serves to regulate the rate of movement of the door in the direction of closure without restricting significantly the rate of movement in the direction of opening. Accordingly, the damping arrangement provides a steady controlled closing force for smooth closing of the door under the action of the spring, yet does not inhibit (or only minimally inhibits) opening of the door so that the opening moment required to be manually applied is low.
Typically, the operation of the damping arrangement is relieved or rendered ineffective just before the door reaches its closed position so that the resistance afforded by any latch or catch on the door will be overcome to ensure that the door closes fully and is latched. This may be achieved, in the case of a hydraulic damper, by means of a suitable fluid by-pass.

It is known to use an accumulator in the hydraulic damper to accommodate volume changes on opposite sides of a piston of the damping arrangement. This prevents inadvertent sudden movements of the piston due to the presence of air causing volumetric differences on opposite sides of the piston. The accumulator comprises a compressible foam body that is disposed on one side of the piston. In some constructions, the accumulator can inadvertently cause jamming of the movement of the piston. If this happens, the entire unit needs to be disassembled to unlock the piston. This is clearly highly inconvenient.

There is a need to provide a concealed door closer which does not inadvertently jam as a result of improper action by an accumulator incorporated within the hydraulic damper.

The concealed construction of known concealed door closer, where the housing containing the spring and damper arrangement is recessed and hidden within the door leaf, and only a face plate is exposed, inherently restricts both the versatility of the construction and the facility easily to install the concealed door closer and to adjust the operation of the unit after installation, in particular by a person other than a trained installer or engineer.

There is also a need to provide a concealed door closer which readily permits easy installation and adjustment of the operation of the door closer after installation, in particular the damping of the closure operation, and consequently the closure period.

WO-A-2005/124079 discloses a door closer having the features of the pre-characterising portion of claim 1.

The present invention aims to overcome problems in these known concealed door closers.

The present invention accordingly provides a door closer comprising: (a) a housing for fitting into a door, the housing having a mounting plate with an opening adjacent to a central bore of the housing; (b) a tension member extending longitudinally within the central bore of the housing and extending outwardly of the housing through the opening to define an end thereof for fitting to a door frame; (c) a movable body within the housing and adapted for longitudinal movement within the central bore, the movable body being connected to the tension member; (d) a spring within the housing and biasing the movable body in a first direction away from the mounting plate so as to urge the tension member inwardly of the housing in a door closing motion; and (e) a hydraulic damping assembly for damping the longitudinal movement of the movable body at least in the first direction, the hydraulic damping assembly being disposed within the central bore of the housing, wherein the hydraulic damping assembly comprises a piston, coupled to the housing by a piston shaft ,and slidable in a fluid-filled chamber within the movable body, the piston divides the chamber into two compartments and the piston permits restricted movement of the fluid from one compartment to the other when the movable body is moved relative to the piston, and an accumulator comprising a compressible foam body disposed in the fluid-filled chamber so as to be compressible by the piston when the movable body has been moved by movement of the tension member out of the housing, and characterised by further comprising a spacer for spacing an outer circumferential surface of the compressible foam body from an outer circumferential surface of the piston.

This aspect of the present invention is predicated on the finding by the present inventor that inadvertent sealing of the accumulator against the piston in the compressed condition can cause jamming of the hydraulic damper of the concealed door closer. The inventor found that this problem can be solved by additionally providing a spacer for spacing an outer circumferential surface of the compressible foam body of the accumulator from an outer circumferential surface of the piston. This avoids inadvertent jamming of the piston caused by trapping of the compressible foam body between the piston and its cylinder,

In one embodiment, the spacer comprises a washer disposed between a rear surface of the piston and the compressible foam body. Preferably, the washer is annular and surrounds the piston shaft. Preferably, the washer has an outer cylindrical surface that is recessed radially inwardly relative to the outer cylindrical surface of the piston. Preferably, the diameter of the washer is smaller than that of the piston by a distance of at least 1mm, more preferably from 1 to 5 mm.

In another embodiment, the spacer comprises an extension, on a rear surface of the piston, which extends towards the accumulator. Preferably, the extension is integral with the piston. Preferably, the extension is annular and surrounds the piston shaft. Preferably, the extension has an outer surface that is recessed radially inwardly relative to the outer cylindrical surface of the piston and has an end surface radially inwardly recessed relative to the outer cylindrical surface of the piston which contacts the accumulator. Preferably, a diameter of the end surface is smaller than that of the outer cylindrical surface of the piston by a distance of at least 1mm, more preferably from 1 to 5 mm. The extension outer surface may be cylindrical, forming a stepped configuration on the rear surface of the piston. Alternatively, the extension outer surface may be frusto-conical.

The present invention also provides a door closer comprising: (a) a housing for fitting into a door, the housing having a mounting plate with an opening adjacent to a central bore of the housing; (b) a tension member extending longitudinally within the central bore of the housing and extending outwardly of the housing through the opening to define an end thereof for fitting to a door frame; (c) a movable body within the housing and adapted for longitudinal movement within the central bore, the movable body being connected to the tension member; (d) a spring within the housing and biasing the movable body in a first direction away from the mounting plate so as to urge the tension member inwardly of the housing in a door closing motion; and (e) a hydraulic damping assembly for damping the longitudinal movement of the movable body at least in the first direction, the hydraulic damping assembly being disposed within the central bore of the housing, wherein the hydraulic damping assembly comprises a piston, coupled to the housing by a piston shaft ,and slidable in a fluid-filled chamber within the movable body, the piston divides the chamber into two compartments and the piston permits restricted movement of the fluid from one compartment to the other when the movable body is moved relative to the piston, and an accumulator comprising a compressible foam body disposed in the fluid-filled chamber so as to be compressible by the piston when the movable body has been moved by movement of the tension member out of the housing, characterised by the compressible foam body comprising an elongate body having a channel in an outer circumferential surface thereof extending along the length of the elongate body.

This aspect of the present invention is predicated on the finding by the present inventor that inadvertent sealing of the accumulator against the piston in the compressed condition can cause jamming of the hydraulic damper of the concealed door closer. The inventor found that this problem can be solved by shaping the accumulator to provide a vented channel away from the surface that contacts the piston, thereby preventing such sealing from occurring, and permitting flow of hydraulic fluid into the chamber portion that contains the accumulator.

Preferably, the compressible foam body at least partly surrounds the piston shaft, the piston shaft being received in an elongate bore of the compressible foam body.

Preferably, the channel and the bore are integral.

In one embodiment, the channel has radially directed sidewalls which are mutually spaced apart. The radially directed sidewalls may be mutually inclined at an angle of 40 +/- 5 degrees.

In another embodiment, the accumulator has an elongate chamber extending along the length of the elongate body, and an arcuate web portion at the outer circumferential surface of the elongate body that extends adjacent to the chamber, and the channel comprises an elongate slit that extends through the arcuate web portion from the outer circumferential surface to the chamber. Preferably, the arcuate web portion has been integrally moulded together with the remainder of the elongate body. More preferably, the slit has been formed by cutting through the arcuate web portion. The cut slit may extend radially from the outer circumferential surface to the chamber.

Preferably, the compressible foam body has a closed cell foam structure.

Preferably, the compressible foam body is composed of neoprene.

The present invention also provides a door closer comprising: (a) a housing for fitting into a door, the housing having a mounting plate with an opening adjacent to a central bore of the housing; (b) a tension member extending longitudinally within the central bore of the housing and extending outwardly of the housing through the opening to define an end thereof for fitting to a door frame; (c) a movable body within the housing and adapted for longitudinal movement within the central bore, the movable body being connected to the tension member; (d) a spring within the housing and biasing the movable body in a first direction away from the mounting plate so as to urge the tension member inwardly of the housing in a door closing motion; and (e) a hydraulic damping assembly for damping the longitudinal movement of the movable body at least in the first direction, the hydraulic damping assembly being disposed within the central bore of the housing, wherein the hydraulic damping assembly comprises a piston, coupled to the housing by a piston shaft ,and slidable in a fluid-filled chamber within the movable body, the piston divides the chamber into two compartments and the piston permits restricted movement of the fluid from one compartment to the other when the movable body is moved relative to the piston, and an accumulator comprising a compressible foam body disposed in the fluid-filled chamber so as to be compressible by the piston when the movable body has been moved by movement of the tension member out of the housing, characterised by the compressible foam body comprising a foam having a density of greater than 0.7 g/cm3.

Preferably, the compressible foam body at least partly surrounds the piston shaft, the piston shaft being received in an elongate bore of the compressible foam body.

Preferably, the foam has a density of from 0.7 to 0.8 g/cm3.

Preferably, the foam is a closed cell expanded foam.

Preferably, the foam is composed of neoprene

Preferably, the door closer further comprises a spacer for spacing an outer circumferential surface of the compressible foam body from an outer circumferential surface of the piston.

Preferably, the compressible foam body comprises an elongate body having a channel in an outer circumferential surface thereof extending along the length of the elongate body.

In the door closers of the preferred embodiments of the present invention, the accumulator expands and contracts under the pressure of the fluid moving between the two sides of the piston head within the housing comprising a damper tube. This enables the door closer to have continuous damping from an opening angle of approximately 90 degrees down to closure of the door.

In contrast, if an accumulator is not provided in accordance with the present invention, the damping action is usually not effective until the door has partially closed from the 90 degree opening position and reached an opening angle about 45 degrees. The accumulator therefore provides effective damping of the door closing across its range of movement from a fully open position (i.e. 90 degrees of opening) to a fully closed position, ignoring any deliberate absence of damping immediately prior to final closure in the last few degrees of motion to enable the door motion to overcome any latching resistance on final closure. Such absence of damping causes the latching speed to increase to overcome any latch resistance on door closure

Ideally the accumulator should not be compressed by the rear of the piston head moving towards the accumulator when the door is opened. In practice, designers of concealed door closers wish to have the smallest length of product to make installation less difficult. In addition, when the door closer is adjusted to reduce or eliminate the latch speed up action, by shifting the location of the piston shaft (e.g. the rear of the piston shaft is screwed outwardly relative to the housing), the piston head is brought even closer to the accumulator when the door is opened.

The inventor found that when using an accumulator inadvertent jamming of the door closer could occur. The various aspects of the present invention aim to avoid undesirable interactions between the accumulator and the piston head, and so avoid the jamming problem.

One modification made to the accumulator in accordance with an embodiment of the invention is to cut a longitudinal slit along the accumulator. This solved the jamming problem by preventing the accumulator creating a 360 degree seal.

However, in circumstances when the piston shaft was screwed outwardly to prevent the latching speed up, the inventor found that it was sometimes possible for the accumulator still to jam. It is believed that this is because the longitudinal split in the accumulator may no longer be fully effective under conditions where the accumulator is compressed by the rear of the piston head. Furthermore, the inventor found that further problems with the front cut edge of the accumulator jamming between the piston head and the damper tube inner wall under some circumstances.

The longitudinally cut accumulator does improve the operation of the door closer in a door closer design in which the accumulator is not compressed by the piston during operation.

To provide a modified door closer for use in circumstances in which the accumulator is compressed by the piston during operation, the inventor devised the provision of a spacer or alternatively a piston head of reduced diameter at the rear end thereof, to longitudinally space the accumulator from the piston and thereby prevent the front cut edge of the accumulator from inadvertently jamming between the piston head and the damper tube inner wall. Both of these designs worked successfully.

When a spacer or reduced diameter piston head was employed, the inventor found that there was no requirement to provide the accumulator with a longitudinal cut to achieve the result of avoiding jamming of the accumulator edge between the piston head and the damper tube inner wall. However, in practice it is believed that it would probably be best to have the combination of both a longitudinally cut accumulator and a spacer/shaped piston head.

The inventor then proceeded to investigate the effect of the properties of the closed cell expanded neoprene foam on the avoidance of jamming of the door closer. The inventor found that the density of the closed cell expanded neoprene foam affected the performance of the avoidance of jamming of the door closer. In particular, in accordance with this aspect of the invention it was found that a foam having a density of greater than 0.7 g/cm3, more preferably from 0.7 to 0.8 g/cm3, did not encounter the jamming problem, even in the absence of any longitudinal cut and any spacer, unlike a lighter foam. There is a trade off between how well the accumulator performs in accommodating volumetric changes between the two chambers of the housing, which depends upon the compressibility of the foam and would favour a low density highly compressible foam, and how well the accumulator performs in avoiding inadvertent jamming, which would favour a higher density less compressible foam. In accordance with this aspect of the invention, this trade off is achieved by providing a foam, preferably a closed cell expanded foam, most typically of neoprene, having a density of greater than 0.7 g/cm3, more preferably from 0.7 to 0.8 g/cm3,

It will be immediately apparent to a skilled person that the use of the compressible foam body comprising an elongate body having a channel in an outer circumferential surface thereof extending along the length of the elongate body can be optionally combined with the use of a spacer for spacing an outer circumferential surface of the compressible foam body from an outer circumferential surface of the piston to reduce further the risk of jamming of the piston caused by trapping of the compressible foam body between the piston and its cylinder, Also, the compressible foam body may, or may not, have the combination of both a channel in an outer circumferential surface thereof extending along the length of the elongate body and a density of greater than 0.7 g/cm3, more preferably from 0.7 to 0.8 g/cm3, and/or comprise a closed cell expanded foam, most typically of neoprene.

The door closer of the present invention can be used with a fitting tool for a concealed door closer, the fitting tool comprising a U-shaped body with two parallel legs extending away from a base and with a central elongate linear slot, open at one end, between the two legs, the body having a first end face which is orthogonal to the through-direction of the slot and a second end face which is inclined at an acute angle both to the first end face and the through-direction of the slot.

This preferred embodiment of the present invention is predicated on the finding by the present inventor that the fitting tool can be shaped to have two opposite mutually inclined faces so that when fitted over the tension member of the concealed door closer, the door leaf and the door frame can be retained at a desired angular relationship in a partly open condition to permit the door fitting to be offered up to the door frame at the correct orientation, thereby permitting ready fixing, e.g. by screws, of the door fitting to the door frame.

Preferably, the first and second end faces are mutually inclined by an angle of from 15 to 45°, typically from 20 to 30°.

Preferably, the slot has parallel sidewalls defined by the legs.

Preferably, the body comprises a U-shaped central wall, orthogonal to the through-direction of the slot and first and second peripheral raised walls that respectively define the first and second end faces.

Preferably, the body is formed of an injection moulded plastics material.

Embodiments of the present invention will now be described by way of example only with reference to the accompanying drawings, in which:-
FIG. 1 shows a longitudinal sectional view, from above, through an embodiment of door closer in accordance with the invention, and when fitted to a door leaf and to a door frame;
FIG. 2 shows a cross-section through a first preferred construction of an accumulator in the door closer of FIG. 1;
FIG. 3 shows a cross-section through a second preferred construction of an accumulator in the door closer of FIG. 1;
FIG. 4 shows a longitudinal sectional view, from above, through a portion of a second embodiment of door closer in accordance with the invention, the portion showing a first modified construction of the piston head assembly;
FIG. 5 shows a longitudinal sectional view, from above, through a portion of a third embodiment of door closer in accordance with the invention, the portion showing a second modified construction of the piston head assembly;
FIG. 6 shows a perspective view of a restrictor device in accordance with another embodiment of the invention for use in installing a door closer;
FIG. 7 shows a cross-section through restrictor device of FIG. 6 but with the door closer in its "extended" or "door open" condition; and
FIG. 8 shows a plan view of the restrictor device of FIG. 6 when used to install the door closer.

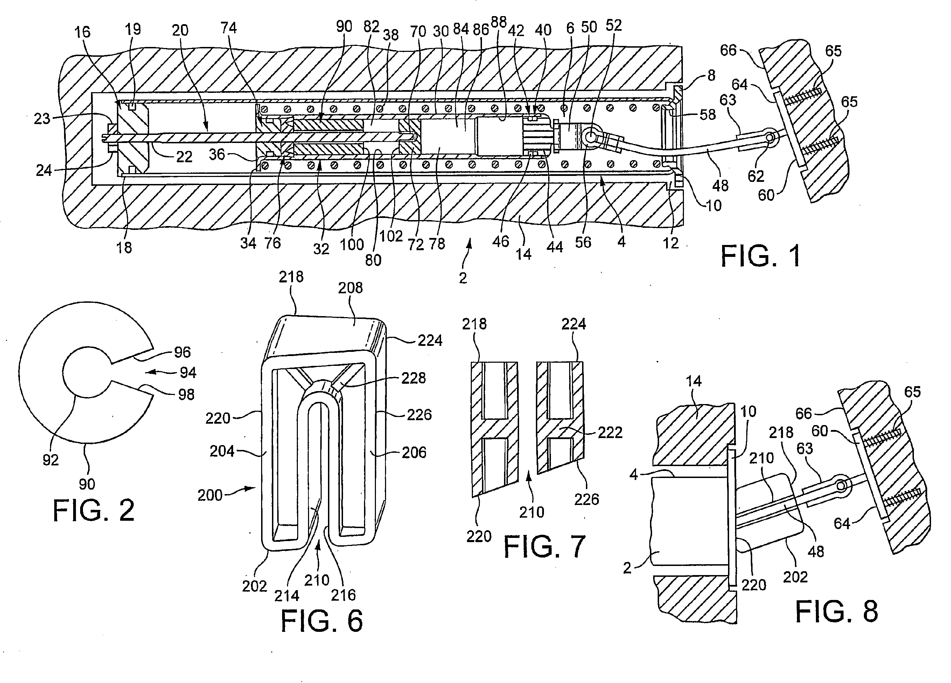

Referring now to the accompanying drawings, a preferred embodiment of door closer 2 in accordance with the invention, as shown in FIGS. 1 to 2, includes an outer tubular housing 4 having a central cylindrical bore 6. At one end of the housing 4 is fitted a mounting plate 8 which has a flange 10 extending orthogonally away from the housing 4. In use, the flange 10 is fitted in a recess 12 cut into the edge of the door leaf 14 and the housing 4 extends inwardly into the door leaf 14, in a direction orthogonal to the hinge axis (not shown).

At the other end of the housing 4 a cylindrical end piece 16 is fitted into the housing 4 so as to close off the bore 6. The end piece 16 is secured in position, for example by crimping the end edge 18 of the housing 4 radially inwardly into an annular recess 19 in the end piece 16. A piston shaft, hereinafter referred to as a plunger shaft 20, is fitted to the end piece 16 and extends axially along a portion of the bore 6, typically about one half of the length of the bore 6. A reduced diameter portion 22 of the plunger shaft 20 extends through a hole 23 in the end piece 16, and a lock nut 24 is threaded onto an end of the plunger shaft 20 on the exposed face of the end piece 16. This arrangement permits the longitudinal position of the plunger shaft 20 in the bore 6 to be adjusted over a small distance after manufacture and assembly of the door closer 2 by turning the lock nut 24.

A hydraulic damper assembly 30 is mounted on the plunger shaft 20 for sliding movement therealong. The hydraulic damper assembly 30 includes an inner tube 32 which extends axially along a portion of the bore 6, typically about one half of the length of the bore 6. The inner tube 32 has an integral radially outwardly directed flange 34 at one end 36 thereof that is towards the end piece 16. The flange 34 and the mounting plate 8 define opposed bearing surfaces against which the opposed ends of a helical compression spring 38 are seated. The helical compression spring 38 surrounds the inner tube 32 and inner tube 32 is free to move along the bore 6 within the internal diameter of the helical compression spring 38 as the spring 38 is progressively compressed or expanded.

At the other end 40 of the inner tube 32 the end edge 42 is crimped radially inwardly to be mounted to a threaded connector 44 fitted within the inner tube 32, an O-ring seal 46 being disposed between the inner tube 32 and the threaded connector 44. A leaf spring assembly 48 is fitted to the threaded connector 44. The leaf spring assembly 48 includes a female threaded part 50 threadably fitted to a male threaded part of the threaded connector 44 to retain a pivot support 52 on the threaded connector 44. A tension member in the form of a leaf spring 54 is pivotally mounted to the pivot support 52 by a first pivot 56, for example a rivet. The leaf spring 54 extends trough a central hole 58 in the mounting plate 8. The other end of the leaf spring 54 is pivotally mounted to a door frame fitting 60 by a second pivot 62 in an end fitting 63 affixed to the leaf spring 54. The door frame fitting 60 has a flange 64 that is fixedly attached, e.g. by screws, to a door frame 66.

FIG. 1 shows the door closer in a partly open configuration. However, when the door is closed, the second pivot 62 is received in the end of the bore 6 through the central hole 58 and the two flanges 10, 64 abut together with the abutting of the edge of the door leaf 14 and the door frame 66.

As the door is pushed open, the hinge action on the door causes the mounting plate 8 to be rotated away from the door frame fitting 58, and the leaf spring 54 is progressively pulled out of the housing 4. This causes the inner tube 32 to be pulled by the leaf spring 54 towards the mounting plate 8 (towards the right-hand direction in FIG. 1). The flange 34 of the inner tube 32 is urged against the helical compression spring 38 so that the helical compression spring 38 is progressively increasingly compressed as the inner tube 32 moves. The helical compression spring 38 presents a bias against which the door must be pushed to be opened, and also provides a restoring force for automatically closing the door after the door has been released. In the fully opened state, the leaf spring 54 is fully external of the outer tubular housing 4, and the helical compression spring 38 is substantially fully compressed.

The structure and operation of the hydraulic damping assembly will now be described.

The plunger shaft 20 is provided at its end thereof which is remote from the reduced diameter portion 22 fitted into the end piece 16 with a threaded end 70 threadably received in a blind hole of a piston head 72 which moves axially within the inner tube 32. The end of the inner tube 32 remote from the threaded connector 44 is fitted with a plug 74, and a piston seal 76 fitted adjacent the plug 74. The plug 74 and piston seal 76 slidably surround the plunger shaft 20. The piston seal 76 and threaded connector 44 define therebetween an elongate chamber 78 within which the piston head 72 can move longitudinally as a result of movement of the inner tube 32 relative to and longitudinally along the outer tube 4.

The piston seal 76 comprises an annular body of plastics or rubber material, typically nylon, and has an external diameter which is substantially the same as the internal diameter of the inner tube 32 so that when the piston seal 76 is received in the inner tube 32, there is a fluid tight seal between the outer circumferential surface of the piston seal 76 and the internal surface 80 of the inner tube 32. The internal circumferential surface of the piston seal 76 is slidably fitted on the outer circumferential surface of the plunger shaft 20 and is sealed relative thereto.

The piston head 72 moves within the chamber 78, and divides the chamber 78 into two first and second portions 82, 84. The first portion 82 is adjacent the piston seal 76 and the second portion 84 is adjacent the threaded connector 44. The outer diameter of the piston head 72 is slightly smaller than the inner diameter of the inner tube 32. The chamber 78 is filled with hydraulic fluid 86. When the piston head 72 moves longitudinally along the chamber 78, the hydraulic fluid 86 can flow over the outer circumferential surface of the piston head 72 in a slow and controlled manner. This damps the movement of the piston head 72, and thereby damps the action of the hydraulic spring 38 during opening and closing of the concealed door closer 2. At that end of the second portion 84 which is closed by the threaded connector 44, the inner diameter of the inner tube 32 is slightly enlarged as compared to the remainder of the inner tube 32, to provide a release portion 88. During the termination of the door closing operation, the enlarged diameter of the release portion 88 permits a greater rate of fluid flow over the piston head 72, and thereby reduced damping. This provides a greater closing force to ensure that the door is properly closed by overcoming any resistance from a door latch.

An accumulator 90 comprises an elongate foam member which is disposed in the first portion 82 of the chamber 78 adjacent the piston seal 76 and surrounds the plunger shaft 20. The accumulator 90 comprises a body of foamed plastics or rubber material, comprising a closed cell foam structure, such as neoprene. Typically, the accumulator 90 comprises a foam, most preferably a closed cell expanded foam, most typically of neoprene, having a density of greater than 0.6 g/cm3, more preferably from 0.6 to 0.7 g/cm3, Such a foam is available in commerce under Product Reference BEL CR 0.6 from Belpar Rubber Company Limited, St. Albans, Herts, UK. Alternatively, the accumulator 90 comprises a foam, most preferably a closed cell expanded foam, most typically of neoprene, having a density of greater than 0.7 g/cm3, more preferably from 0.7 to 0.8 g/cm3, Such a foam is available in commerce under Product Reference BEL CR B75 from Belpar Rubber Company Limited, St. Albans, Herts, UK.

The accumulator 90 has a cross-sectional shape as shown in Figure 2, wherein a central bore 92 is provided within which the plunger shaft 20 is received. The accumulator 90 has a longitudinally extending opening 94. The opening 94 extends along the length of the accumulator 90 and is formed as a channel that has radially directed sidewalls 96, 98, typically mutually inclined at an angle of 40 +/- 5 degrees. The opening 94 integrally connects with the bore 92, to form a "keyhole" cut-out, but the opening 94 and the bore 92 may be separated.

When the door leaf 14 is fully opened, the piston seal 76 has moved (to the right in FIG.1) as far as possible in a direction towards the piston head 72. Accordingly, the accumulator 90 is compressed, because it is composed of compressible foam material, between the piston seal 76 and the piston head 72. The accumulator 90 acts as a self-contained volume of compressible gas (air) within the closed cell structure. When the inner tube 32 has moved so that the plunger shaft 20 is positioned so as to be fully within the first portion 82 of the chamber 78 of the hydraulic unit, the "new" volume of the plunger shaft 20 may be introduced into the first portion 82 of the chamber 78 without causing a hydraulic lock. The accumulator 90 therefore accommodates the changes in total volume in the first portion 82 of the chamber 78 taken up by the hydraulic fluid and the air within the closed cell structure of the accumulator 90 as a result of the plunger shaft 20 being disposed substantially within or substantially outside the first portion 82 of the chamber 78 depending on whether the door is open or closed.

By providing an elongate opening or channel 94 along the accumulator 90, this ensures that there is no possibility of the end 100 of the accumulator 90 inadvertently sealing against the adjacent surface 102 of the piston head 72 that faces the first portion 82 of the chamber 78. During the initial phase of the door closing operation, even if the end 100 of the accumulator 90 is pushed hard up against the adjacent surface 102 of the piston head 72, the inner tube 32 is free to move back under spring pressure from spring 38 and hydraulic fluid can flow into the first portion 82 of the chamber over the outer surface of the piston head 72 because on entering the first portion 82 the opening 94 acts to vent the hydraulic fluid away from the piston head 72, preventing a seal between the accumulator 90 and the piston head 72.

Alternatively, in accordance with another embodiment of the present invention, when the accumulator 90 comprises a foam, most preferably a closed cell expanded foam, most typically of neoprene, having a density of greater than 0.7 g/cm3, more preferably from 0.7 to 0.8 g/cm3, the opening 94 may be omitted and the accumulator may comprise an simple annular cylinder having continuous outer and inner surfaces,

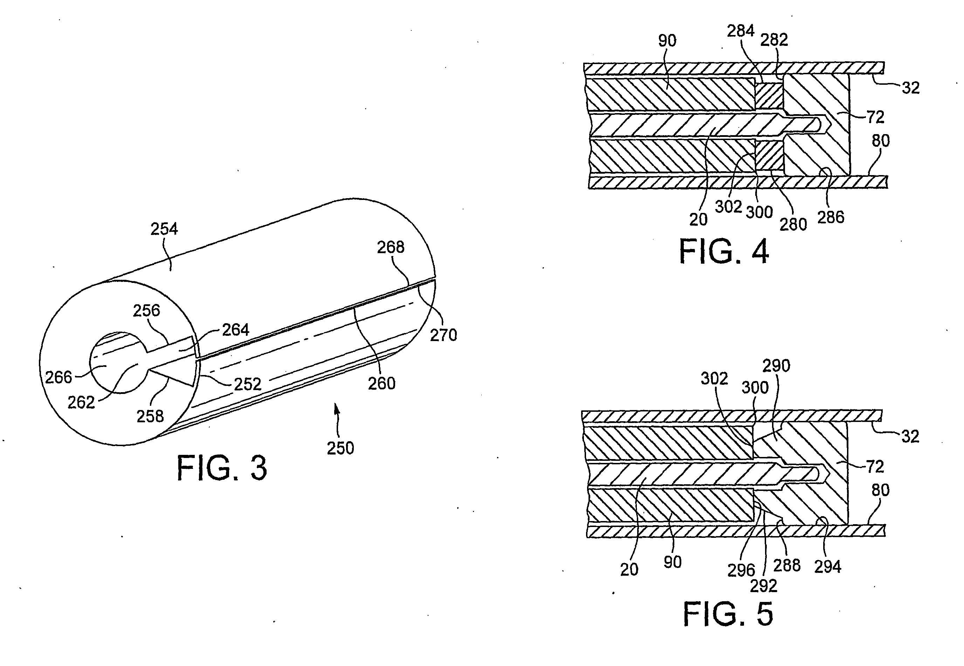

FIG. 3 shows a cross-section through a second preferred construction of an accumulator in the door closer of FIG. 1. In this construction, the accumulator 250 additionally has an arcuate web portion 252 at its outer circumferential surface 254 that extends between the radially directed sidewalls 256, 258 along the length of the accumulator 250. An elongate slit 260 extends through the arcuate web portion 252 along the length of the accumulator 250. Typically, the arcuate web portion 252 has been integrally moulded together with the remainder of the elongate foam body of the accumulator 250, and the slit 260 is formed by cutting through the arcuate web portion 252, the cut slit 260 extending radially from the outer circumferential surface 254 to the key hole cut-out 262 comprised of the opening 264, which comprises a chamber, bounded by the radially directed sidewalls 256, 258, and the central bore 266 integral therewith. The slit 260 provides that the compressible foam body of the accumulator 250 has a channel in the outer circumferential surface 254 thereof extending along the length of the elongate foam body, as for the first embodiment, because the slit 260 permits fluid connection between the outer circumferential surface 254 and the key hole cut-out 262. The slit 260 is formed without removal of any foam material so that the two cut faces 268, 270 of the slit 260 abut each other when the accumulator 250 is received in the door closer, and also when the accumulator 250 is in an unstressed condition prior to insertion into the door closer. However, fluid pressure within the first portion 82 of the chamber 78 can permit fluid to flow through the slit 260 so that the slit 260 and the opening 264 can in combination act to vent the hydraulic fluid away from the piston head 72, preventing a seal between the accumulator 250 and the piston head 72.

The modification of the accumulator of FIG. 3 provides two advantages. First, the foam accumulator 250 is easier to mould because the moulded foam body has a continuous outer cylindrical surface 254, rather than a discontinuous surface as for the embodiment of FIGs. 1 and 2. Second, the provision of a slit in the continuous outer cylindrical surface 254 provides a more dimensionally stable structure for the foam accumulator 250.

Again, in accordance with another embodiment of the present invention, the accumulator 250 may comprise a foam, most preferably a closed cell expanded foam, most typically of neoprene, having a density of greater than 0.7 g/cm3, more preferably from 0.7 to 0.8 g/cm3.

Second and third embodiments of a door closer in accordance with the present invention are disclosed with reference to FIGs. 4 and 5 in which there is additionally provided a spacer for spacing an outer circumferential surface of the compressible foam body of the accumulator from an outer circumferential surface of the piston. This avoids inadvertent jamming of the piston caused by trapping of the compressible foam body between the piston and its cylinder, In these embodiments, the accumulator may comprises a foam, most preferably a closed cell expanded foam, most typically of neoprene, having a density of greater than 0.7 g/cm3, more preferably from 0.7 to 0.8 g/cm3,

FIG. 4 shows a longitudinal sectional view, from above, through a portion of a second embodiment of door closer in accordance with the invention, the portion showing a first modified construction of the piston head assembly. In this modification, a washer 280 is disposed between the rear surface 282 of the piston head 72 and the accumulator 90. The washer 280 is annular and surrounds the plunger shaft 20. The washer 280 has an outer cylindrical surface 284 that is recessed radially inwardly relative to the outer cylindrical surface 286 of the piston head 72 and, correspondingly, recessed radially inwardly relative to the internal cylindrical surface 80 of the inner tube 32. Typically the diameter of the washer 280 is smaller than that of the piston head 72 by a distance of at least 1mm, preferably from 1 to 5 mm. The washer may be made of a metal or a hard plastics material.

In one embodiment, an 8mm diameter washer 280 was used with a 12 mm diameter piston head 72. In another embodiment, having larger dimensions, the washer 280 had a diameter 1 mm less than that of the piston head 72.

FIG. 5 shows a longitudinal sectional view, from above, through a portion of a third embodiment of door closer in accordance with the invention, the portion showing a second modified construction of the piston head assembly. In this modification, the rear surface 288 of the piston head 72 is integrally shaped to form an extension 290 that extends towards the accumulator 90. The extension 290 is annular, surrounds the plunger shaft 20 and has an outer surface 292 that is recessed radially inwardly relative to the outer cylindrical surface 294 of the cylindrical main portion of the piston head 72. The outer surface 292 may be cylindrical, forming a stepped configuration, or may be frusto-conical. In either case, the end surface 296 of the extension 290 is a small radius portion, radially inwardly recessed relative to the outer cylindrical surface 294 of the piston head 72 and the internal cylindrical surface 80 of the inner tube 32. Other configurations may be employed to provide this structure and function. Typically the diameter of the end surface 296 is smaller than that of the outer cylindrical surface 294 of the piston head 72 by a distance of at least 1mm, more preferably from 1 to 5 mm.

In both of the embodiments of FIGs 4 and 5 the washer 280 or the extension 290 act laterally to space the accumulator 90 (or accumulator 290 if used in combination with the embodiment of FIG 3) from the portion of the piston head 72 that slides against the internal cylindrical surface 80 of the inner tube 32. This provides the advantage that there is no, or a significantly reduced, possibility of a radially outer edge 300 of the facing accumulator end 302 inadvertently becoming wedged between the piston head 72 and the internal cylindrical surface 80 of the inner tube 32. Such wedging can cause the door closer to jam in a catastrophic manner, requiring disassembly to unjam the device, or even disposal of the device.

In accordance with another preferred aspect of the present invention, with reference to FIGS. 6 to 8 there is provided a fitting tool for a concealed door closer. The fitting tool comprises a movement restrictor device for use in installing a concealed door closer, such as the concealed door closer of the first embodiment shown in Figures 1 and 2. As shown in Figure 1, when the concealed door closer 2 is installed, the housing 4 is inserted into a hole in the door leaf 14 and the flange 10 of the mounting plate 8 is fitted into a recess 12 cut into the edge of the door leaf 14. This is a straightforward installing operation. However, thereafter the door frame fitting 60 at the free end of the leaf spring 54 needs to be fixedly attached to the door frame 66, for example by screws 65 being screwed through the flange 64. During this fitting operation, the door leaf 14 needs to be held open against the restoring force of the helical spring 38. This can be difficult to achieve in practice. Furthermore, the door leaf 14 has to be held open sufficiently to permit the installer to be able to use a screwdriver to access the screws 65. Obviously, the installer does not want the screwdriver head to slip and scratch the exposed surface of the flange 64 of the door frame fitting 60. Also, the flange 64 must be positioned adjacent to and parallel with the door frame 66. This orientation of the flange 64 can also be difficult to achieve.

In accordance with this additional preferred aspect of the present invention, a fitting tool comprising a movement restrictor device 200 is provided. The restrictor device 200 comprises a body 202 having a generally U-shape, with two generally parallel legs 204, 206 extending away from a base 208 and with a central elongate linear slot 210, open at one end 212, between the two legs 204, 206. The slot 210 has parallel sidewalls 214,216 defined by the legs 204,206. The body 202 has a first end face 218 which is orthogonal to the through-direction of the slot 210 and a second end face 220 which is inclined at an acute angle both to the first end face 218 and the through-direction of the slot 210. Typically, the first and second end faces 218, 220 are mutually inclined by an angle of from 15 to 45°, typically from 20 to 30°. The body 202 is typically formed of an injection moulded plastics material, such as acetal.

The restrictor body 202 may be a solid body but more preferably, as shown in the illustrated embodiment, the body 202 comprises a central wall 222, orthogonal to the through-direction of the slot 210 and U-shaped. First and second peripheral raised walls 224,226 respectively define the first and second end faces 218, 220. One or more reinforcing ribs 228 may be provided extending between spaced parts of the raised walls 224,226 of one or both of the end faces 218, 220.

The central slot 210 of the restrictor device 200 has a width which is selected so as to be slightly larger than the thickness, typically in a horizontal direction, of a tension member such as a leaf spring, of an associated concealed door closer, such as that of Figures 1 and 2.

As shown in Figure 8, when used to install an associated concealed door closer 2, before or after the door closer 2 has been fitted within the door leaf 14, the tension member 48 is partly pulled out against the bias of the spring 38. The restrictor device 200 is fitted on the tension member 48 by sliding the tension member 48 into the slot 210. The second end face 220 faces, and typically bears against, flange 10. The first end face 218 faces, and typically bears against, the end fitting 63.

The restrictor device 200 holds the tension member 48 partially out of the door leaf 14 to enable the door frame fitting 60 to be offered up to the door frame 66 with the door leaf 14 being in a partly open configuration. The mutual angular inclination between the first and second end faces 218, 220 of the restrictor device 200 permits the door frame fitting 60 to be held at the required angle so that it can be placed flat against the door frame 66, with sufficient space between the door frame 66 and the door leaf 14 to enable access by a screwdriver to screw the screws 65 into the door frame 66. The angle of inclination between the two end faces 218,220 of the restrictor device 200 is selected to provide for the respective concealed door closer 2, with which the restrictor device 200 may be sold together with as a kit of parts, that the correct separation and angle of orientation of the door frame fitting 60 and the remainder of the concealed door closer 2 can be achieved during the installation operation. The provision of this restrictor device 200 greatly eases the installation of the concealed door closer 2, to enable ready fitting to the door frame 66.

When the opening direction of the door is in the opposite rotational direction to that shown in FIG. 8, the door closer and the fitting tool can be used in an inverted (i.e. upside down) configuration.

It will be apparent to those skilled in the art that various modifications may be made to the disclosed embodiments without departing from the scope of the invention disclosed herein.

## Claims

1. A door closer comprising:
(a) a housing (4) for fitting into a door, the housing (4) having a mounting plate (8) with an opening (58) adjacent to a central bore (6) of the housing (4);
(b) a tension member (48) extending longitudinally within the central bore (6) of the housing (4) and extending outwardly of the housing (4) through the opening (58) to define an end (63) thereof for fitting to a door frame;
(c) a movable body (32) within the housing (4) and adapted for longitudinal movement within the central bore (6) , the movable body (32) being connected to the tension member (48);
(d) a spring (38) within the housing (4) and biasing the movable body (32) in a first direction away from the mounting plate (8) so as to urge the tension member (48) inwardly of the housing (4) in a door closing motion; and
(e) a hydraulic damping assembly (30) for damping the longitudinal movement of the movable body (32) at least in the first direction, the hydraulic damping assembly (30) being disposed within the central bore (6) of the housing (4), wherein the hydraulic damping assembly (300 comprises a piston (72), coupled to the housing (4) by a piston shaft (20), and slidable in a fluid-filled chamber (78) within the movable body (32), the piston divides the chamber (78) into two compartments (82, 84) and the piston (72) permits restricted movement of the fluid from one compartment to the other when the movable body (32) is moved relative to the piston (72), and an accumulator (90) comprising a compressible foam body disposed in the fluid-filled chamber (78) so as to be compressible by the piston (72) when the movable body (32) has been moved by movement of the tension member (48) out of the housing (4), and **characterised by** further comprising a spacer (280; 290) for spacing an outer circumferential surface (300) of the compressible foam body (90) from an outer circumferential surface (286; 294) of the piston (72).

2. A door closer according to claim 1 wherein the spacer comprises a washer (280) disposed between a rear surface (282) of the piston (72) and the compressible foam body (90).

3. A door closer according to claim 2 wherein the washer (280) is annular and surrounds the piston shaft (20), and the washer (280) has an outer cylindrical surface (284) that is recessed radially inwardly relative to the outer cylindrical surface (286) of the piston (72).

4. A door closer according to claim 1 wherein the spacer comprises an extension (290), on a rear surface (288) of the piston (72), which extends towards the accumulator (90).

5. A door closer according to claim 4 wherein the extension (290) is integral with the piston (72).

6. A door closer according to claim 5 wherein the extension (290) is annular and surrounds the piston shaft (20), and the extension (290) has an outer surface (292) that is recessed radially inwardly relative to the outer cylindrical surface (294) of the piston (72) and has an end surface (296) radially inwardly recessed relative to the outer cylindrical surface (294) of the piston (72) which contacts the accumulator (90).

7. A door closer according to claim 6 wherein the extension outer surface (292) is cylindrical, forming a stepped configuration on the rear surface of the piston (72), or frusto-conical.

8. A door closer comprising:
(a) a housing (4) for fitting into a door, the housing (4) having a mounting plate (8) with an opening (58) adjacent to a central bore (6) of the housing (4);
(b) a tension member (48) extending longitudinally within the central bore (6) of the housing (4) and extending outwardly of the housing (4) through the opening (58) to define an end (63) thereof for fitting to a door frame;
(c) a movable body (32) within the housing (4) and adapted for longitudinal movement within the central bore (6) , the movable body (32) being connected to the tension member (48);
(d) a spring (38) within the housing (4) and biasing the movable body (32) in a first direction away from the mounting plate (8) so as to urge the tension member (48) inwardly of the housing (4) in a door closing motion; and
(e) a hydraulic damping assembly (30) for damping the longitudinal movement of the movable body (32) at least in the first direction, the hydraulic damping assembly (30) being disposed within the central bore (6) of the housing (4), wherein the hydraulic damping assembly (300 comprises a piston (72), coupled to the housing (4) by a piston shaft (20), and slidable in a fluid-filled chamber (78) within the movable body (32), the piston divides the chamber (78) into two compartments (82, 84) and the piston (72) permits restricted movement of the fluid from one compartment to the other when the movable body (32) is moved relative to the piston (72), and an accumulator (90) comprising a compressible foam body disposed in the fluid-filled chamber (78) so as to be compressible by the piston (72) when the movable body (32) has been moved by movement of the tension member (48) out of the housing (4), **characterised by** the compressible foam body (90) comprising an elongate body having a channel (94, 260) in an outer circumferential surface thereof extending along the length of the elongate body.

9. A door closer according to claim 8 wherein the compressible foam body at least partly surrounds the piston shaft (20), the piston shaft (20) being received in an elongate bore (92) of the compressible foam body, and wherein the channel (94,260) and the bore (92) are integral.

10. A door closer according to claim 9 wherein the channel (94) has radially directed sidewalls (96, 98) which are mutually spaced apart, optionally the radially directed sidewalls (96, 98) being mutually inclined at an angle of 40 +/- 5 degrees.

11. A door closer according to claim 9 wherein the accumulator (90) has an elongate chamber (264) extending along the length of the elongate body, and an arcuate web portion (252) at the outer circumferential surface (254) of the elongate body that extends adjacent to the chamber (264), and the channel comprises an elongate slit (260) that extends through the arcuate web portion (252) from the outer circumferential surface (254) to the chamber (264).

12. A door closer according to claim 11 wherein the arcuate web portion (252) has been integrally moulded together with the remainder of the elongate body.

13. A door closer comprising:
(a) a housing (4) for fitting into a door, the housing (4) having a mounting plate (8) with an opening (58) adjacent to a central bore (6) of the housing (4);
(b) a tension member (48) extending longitudinally within the central bore (6) of the housing (4) and extending outwardly of the housing (4) through the opening (58) to define an end (63) thereof for fitting to a door frame;
(c) a movable body (32) within the housing (4) and adapted for longitudinal movement within the central bore (6) , the movable body (32) being connected to the tension member (48);
(d) a spring (38) within the housing (4) and biasing the movable body (32) in a first direction away from the mounting plate (8) so as to urge the tension member (48) inwardly of the housing (4) in a door closing motion; and
(e) a hydraulic damping assembly (30) for damping the longitudinal movement of the movable body (32) at least in the first direction, the hydraulic damping assembly (30) being disposed within the central bore (6) of the housing (4), wherein the hydraulic damping assembly (300 comprises a piston (72), coupled to the housing (4) by a piston shaft (20), and slidable in a fluid-filled chamber (78) within the movable body (32), the piston divides the chamber (78) into two compartments (82, 84) and the piston (72) permits restricted movement of the fluid from one compartment to the other when the movable body (32) is moved relative to the piston (72), and an accumulator (90) comprising a compressible foam body disposed in the fluid-filled chamber (78) so as to be compressible by the piston (72) when the movable body (32) has been moved by movement of the tension member (48) out of the housing (4), **characterised by** the compressible foam body comprising a foam having a density of greater than 0.7 g/cm3.

14. A door closer according to claim 13 wherein the foam has a density of from 0.7 to 0.8 g/cm3.

15. A door closer according to claim 14 or claim 15 wherein the foam is a closed cell expanded foam, optionally composed of neoprene.

## Patentansprüche

1. Türschließer, mit:
(a) einem Gehäuse (4) zum Einpassen in eine Tür, wobei das Gehäuse (4) eine Montageplatte (8) mit einer Öffnung (58) benachbart zu einer zentralen Bohrung (6) des Gehäuses (4) aufweist;
(b) einem Spannungselement (48), das sich in Längsrichtung in der zentralen Bohrung (6) des Gehäuses (4) erstreckt und sich nach außerhalb des Gehäuses (4) durch die Öffnung (58) erstreckt, um sein Ende (63) zum Einpassen in einen Türrahmen festzulegen;
(c) einem beweglichen Körper (32), der in dem Gehäuse (4) ist und der zur Bewegung in Längsrichtung in der zentralen Bohrung (6) ausgelegt ist, wobei der bewegliche Körper (32) mit dem Spannungselement (48) verbunden ist;
(d) einer Feder (38), die im Gehäuse (4) ist und den beweglichen Körper (32) in einer ersten Richtung weg von der Montageplatte (8) vorspannt, um das Spannungselement (48) in das Innere des Gehäuses (4) in einer Türschließbewegung zu drücken; und
(e) einer hydraulischen Dämpfanordnung (30) zum Dämpfen der Längsbewegung des beweglichen Körpers (32) wenigstens in der ersten Richtung, wobei die hydraulische Dämpfanordnung in der zentralen Bohrung (6) des Gehäuses (4) angeordnet ist, wobei die hydraulische Dämpfanordnung (300) einen Kolben (72) umfasst, der mit dem Gehäuse (4) durch eine Kolbenwelle (20) gekoppelt ist, und verschiebbar in einer fluidgefüllten Kammer (78) in dem beweglichen Körper (32) ist, wobei der Kolben die Kammer (78) in zwei Abteilungen (82, 84) teilt und der Kolben (72) eine eingeschränkte Bewegung des Fluids von einer Abteilung in die andere erlaubt, wenn der bewegliche Körper (32) relativ zum Kolben (72) bewegt wird, sowie einen Akkumulator (90), der einen komprimierbaren Schaumkörper umfasst, der in der fluidgefüllten Kammer (78) angeordnet ist, um durch den Kolben (72) komprimierbar zu sein, wenn der bewegliche Körper (32) durch Bewegung des Spannungselements (48) aus dem Gehäuse (4) bewegt worden ist, und **dadurch gekennzeichnet, dass** er ferner einen Abstandhalter (280; 290) umfasst zum Beabstanden einer Außenumfangsfläche (300) des komprimierbaren Schaumkörpers (90) von einer Außenumfangsfläche (286, 294) des Kolbens (72).

2. Türschließer gemäß Anspruch 1, wobei der Abstandhalter eine Beilagscheibe (280) umfasst, die zwischen einer Rückfläche (282) des Kolbens (72) und des komprimierbaren Schaumkörpers (90) angeordnet ist.

3. Türschließer gemäß Anspruch 2, wobei die Beilagscheibe (280) ringförmig ist und die Kolbenwelle (20) umgibt, und die Beilagscheibe (280) eine Außenzylinderfläche (284) aufweist, die radial nach innen relativ zur Außenzylinderfläche (286) des Kolbens (72) abgesetzt ist.

4. Türschließer gemäß Anspruch 1, wobei der Abstandhalter eine Verlängerung (290) auf einer Rückfläche (288) des Kolbens (72) umfasst, die sich in Richtung des Akkumulators (90) erstreckt.

5. Türschließer gemäß Anspruch 4, wobei die Verlängerung (290) einstückig mit dem Kolben (72) ist.

6. Türschließer gemäß Anspruch 5, wobei die Verlängerung (290) ringförmig ist und die Kolbenwelle (20) umgibt, und die Verlängerung (290) eine Außenfläche (292) aufweist, die radial nach innen relativ zur äußeren zylindrischen Oberfläche (294) des Kolbens (72) abgesetzt ist und eine Endfläche (296) aufweist, die radial nach innen relativ zur Außenzylinderfläche (294) des Kolbens (72) abgesetzt ist, der den Akkumulator (90) kontaktiert.

7. Türschließer gemäß Anspruch 6, wobei die Verlängerungsaußenfläche (292) zylindrisch ist, wobei sie eine gestufte Ausgestaltung auf der Rückfläche des Kolbens (72) bildet, oder kegelstumpfförmig.

8. Türschließer, mit:
(a) einem Gehäuse (4) zum Einpassen in eine Tür, wobei das Gehäuse (4) eine Montageplatte (8) mit einer Öffnung (58) benachbart zu einer zentralen Bohrung (6) des Gehäuses (4) aufweist;
(b) einem Spannungselement (48), das sich in Längsrichtung in der zentralen Bohrung (6) des Gehäuses (4) erstreckt und sich nach außerhalb des Gehäuses (4) durch die Öffnung (58) erstreckt, um sein Ende (63) zum Einpassen in einen Türrahmen festzulegen;
(c) einem beweglichen Körper (32), der in dem Gehäuse (4) ist und der zur Bewegung in Längsrichtung in der zentralen Bohrung (6) ausgelegt ist, wobei der bewegliche Körper (32) mit dem Spannungselement (48) verbunden ist;
(d) einer Feder (38), die in dem Gehäuse (4) ist und die den beweglichen Körper (32) in einer ersten Richtung weg von der Montageplatte (8) vorspannt, um das Spannungselement (48) ins Innere des Gehäuses (4) in einer Türschließbewegung zu drücken; und
(e) einer hydraulischen Dämpfanordnung (30) zum Dämpfen der Längsbewegung des beweglichen Körpers (32) wenigstens in der ersten Richtung, wobei die hydraulische Dämpfanordnung (30) in der zentralen Bohrung (6) des Gehäuses (4) angeordnet ist, wobei die hydraulische Dämpfanordnung (300) einen Kolben (72) umfasst, der mit dem Gehäuse (4) durch eine Kolbenwelle (20) gekoppelt ist und verschiebbar in einer fluidgefüllten Kammer (78) in dem beweglichen Körper ist, wobei der Kolben die Kammer (78) in zwei Abteilungen (82, 84) teilt und der Kolben (72) eine eingeschränkte Bewegung des Fluids aus einer Abteilung in die andere erlaubt, wenn der bewegliche Körper (32) relativ zum Kolben (72) bewegt wird, sowie einen Akkumulator (90), der einen komprimierbaren Schaumkörper umfasst, der in der fluidgefüllten Kammer (78) angeordnet ist, um durch den Kolben (72) komprimierbar zu sein, wenn der bewegliche Körper (32) durch Bewegung des Spannungselements (48) aus dem Gehäuse (4) bewegt worden ist, **dadurch gekennzeichnet, dass** der komprimierbare Schaumkörper (90) einen länglichen Körper umfasst, der einen Kanal (94, 260) in seiner Außenumfangsfläche umfasst, der sich entlang der Länge des länglichen Körpers erstreckt.

9. Türschließer gemäß Anspruch 8, wobei der komprimierbare Schaumkörper wenigstens teilweise die Kolbenwelle (20) umgibt, wobei die Kolbenwelle (20) in einer länglichen Bohrung (92) des komprimierbaren Schaumkörpers aufgenommen wird, und wobei der Kanal (94, 260) und die Bohrung (92) einstückig sind.

10. Türschließer gemäß Anspruch 9, wobei der Kanal (94) radial gerichtete Seitenwände (96, 98) aufweist, die gegenseitig voneinander beabstandet sind, wobei optional die radial gerichteten Seitenwände (96, 98) zueinander in einem Winkel von 40 +/- 5 Grad geneigt sind.

11. Türschließer gemäß Anspruch 9, wobei der Akkumulator (90) eine längliche Kammer (264) aufweist, die sich entlang der Länge des länglichen Körpers erstreckt, sowie einen bogenförmigen Gewebeabschnitt (252) an der Außenumfangsfläche (254) des länglichen Körpers, der sich benachbart zur Kammer (264) erstreckt, und der Kanal einen länglichen Schlitz (260) umfasst, der sich durch den bogenförmigen Gewebeabschnitt (252) von der Außenumfangsfläche (254) zur Kammer (264) erstreckt.

12. Türschließer gemäß Anspruch 11, wobei der bogenförmige Gewebeabschnitt (252) einstückig zusammen mit dem Rest des länglichen Körpers geformt worden ist.

13. Türschließer, mit:
(a) einem Gehäuse (4) zum Einpassen in eine Tür, wobei das Gehäuse (4) eine Montageplatte (8) mit einer Öffnung (58) benachbart zu einer zentralen Bohrung (6) des Gehäuses (4) aufweist;
(b) einem Spannungselement (48), das sich in Längsrichtung in der zentralen Bohrung (6) des Gehäuses (4) erstreckt und sich nach außerhalb des Gehäuses (4) durch die Öffnung (58) erstreckt, um sein Ende (63) zum Einpassen in einen Türrahmen festzulegen;
(c) einem beweglichen Körper (32), der in dem Gehäuse ist und der zur Bewegung in Längsrichtung in der zentralen Bohrung (6) ausgelegt ist, wobei der bewegliche Körper (32) mit dem Spannungselement (48) verbunden ist;
(d) einer Feder (38), die in dem Gehäuse (4) ist und die den beweglichen Körper (32) in einer ersten Richtung weg von der Montageplatte (8) vorspannt, um das Spannungselement (48) ins Innere des Gehäuses (4) in einer Türschließbewegung zu drücken; und
(e) einer hydraulischen Dämpfanordnung (30) zum Dämpfen der Längsbewegung des beweglichen Körpers (32) wenigstens in der ersten Richtung, wobei die hydraulische Dämpfanordnung (30) in der zentralen Bohrung (6) des Gehäuses (4) angeordnet ist, wobei die hydraulische Dämpfanordnung (300) einen Kolben (72) umfasst, der mit dem Gehäuse (4) durch eine Kolbenwelle (20) gekoppelt ist und verschiebbar in einer fluidgefüllten Kammer (78) in dem beweglichen Körper (32) ist, wobei der Kolben die Kammer (78) in zwei Abteilungen (82, 84) teilt und der Kolben (72) eine eingeschränkte Bewegung des Fluids von einer Abteilung zur anderen erlaubt, wenn der bewegliche Körper (32) relativ zum Kolben (72) bewegt wird, sowie einen Akkumulator (90), der einen komprimierbaren Schaumkörper umfasst, der in der fluidgefüllten Kammer (78) angeordnet ist, um durch den Kolben (72) komprimierbar zu sein, wenn der bewegliche Körper (32) durch Bewegung des Spannungselements (48) aus dem Gehäuse (4) bewegt worden ist, **dadurch gekennzeichnet, dass** der komprimierbare Schaumkörper einen Schaum mit einer Dichte größer als 0.7g/cm3 umfasst.

14. Türschließer gemäß Anspruch 13, wobei der Schaum eine Dichte von 0.7 bis 0.8 g/cm3 aufweist.

15. Türschließer gemäß Anspruch 14 oder Anspruch 15, wobei der Schaum ein geschlossenzelliger expandierter Schaum ist, der optional aus Neopren besteht.

## Revendications

1. Ferme-porte comprenant :
(a) un boîtier (4) destiné à être monté dans une porte, le boîtier (4) ayant une plaque de montage (8) avec une ouverture (58) adjacente à un alésage central (6) pour le boîtier (4) ;
(b) un élément de tension (48) s'étendant de manière longitudinale à l'intérieur de l'alésage central (6) du boîtier (4) et s'étendant vers l'extérieur du boîtier (4) par l'ouverture (58) afin de définir son extrémité (63) pour être monté sur un cadre de porte ;
(c) un corps mobile (32) à l'intérieur du boîtier (4) et adapté pour le mouvement longitudinal à l'intérieur de l'alésage central (6), le corps mobile (32) étant raccordé à l'élément de tension (48) ;
(d) un ressort (38) à l'intérieur du boîtier (4) et sollicitant le corps mobile (32) dans une première direction à distance de la plaque de montage (8) afin de pousser l'élément de tension (48) vers l'intérieur du boîtier (4) dans un mouvement de fermeture de porte ; et
(e) un ensemble d'amortissement hydraulique (30) pour amortir le mouvement longitudinal du corps mobile (32) au moins dans la première direction, l'ensemble d'amortissement hydraulique (30) étant disposé à l'intérieur de l'alésage central (6) du boîtier (4), dans lequel l'ensemble d'amortissement hydraulique (300) comprend un piston (72) couplé au boîtier (4) par un arbre de piston (20) et pouvant coulisser dans une chambre remplie de fluide (78) à l'intérieur du corps mobile (32), le piston divise la chambre (78) en deux compartiments (82, 84) et le piston (72) permet un mouvement limité du fluide, d'un compartiment à l'autre, lorsque le corps mobile (32) est déplacé par rapport au piston (72) et un accumulateur (90) comprenant un corps de mousse compressible disposé dans la chambre remplie de fluide (78) afin d'être compressible par le piston (72) lorsque le corps mobile (32) a été déplacé par le mouvement de l'élément de tension (48) hors du boîtier (4), et **caractérisé en ce qu'**il comprend en outre un dispositif d'espacement (280, 290) pour espacer une surface circonférentielle externe (300) du corps de mousse compressible (90) à partir d'une surface circonférentielle externe (286, 294) du piston (72).

2. Ferme-porte selon la revendication 1, dans lequel le dispositif d'espacement comprend une rondelle (280) disposée entre une surface arrière (282) du piston (72) et le corps de mousse compressible (90).

3. Ferme-porte selon la revendication 2, dans lequel la rondelle (280) est annulaire et entoure l'arbre de piston (20), et la rondelle (280) a une surface cylindrique externe (284) qui est évidée radialement vers l'intérieur par rapport à la surface cylindrique externe (286) du piston (72).

4. Ferme-porte selon la revendication 1, dans lequel le dispositif d'espacement comprend une extension (290), sur une surface arrière (288) du piston (72), qui s'étend vers l'accumulateur (90).

5. Ferme-porte selon la revendication 4, dans lequel l'extension (290) est solidaire du piston (72).

6. Ferme-porte selon la revendication 5, dans lequel l'extension (290) est annulaire et entoure l'arbre de piston (20), et l'extension (290) a une surface externe (292) qui est évidée radialement vers l'intérieur par rapport à la surface cylindrique externe (294) du piston (72) et a une surface d'extrémité (296) évidée radialement vers l'intérieur par rapport à la surface cylindrique externe (294) du piston (72) qui est en contact avec l'accumulateur (90).

7. Ferme-porte selon la revendication 6, dans lequel la surface externe (292) de l'extension est cylindrique, formant une configuration étagée sur la surface arrière du piston (72) ou tronconique.

8. Ferme-porte comprenant :
(a) un boîtier (4) destiné à être monté dans une porte, le boîtier (4) ayant une plaque de montage (8) avec une ouverture (58) adjacente à un alésage central (6) du boîtier (4) ;
(b) un élément de tension (48) s'étendant de manière longitudinale à l'intérieur de l'alésage central (6) du boîtier (4) et s'étendant vers l'extérieur du boîtier (4) par l'ouverture (58) pour définir son extrémité (63) pour être monté sur un cadre de porte ;
(c) un corps mobile (32) à l'intérieur du boîtier (4) et adapté pour le mouvement longitudinal à l'intérieur de l'alésage central (6), le corps mobile (32) étant raccordé à l'élément de tension (48) ;
(d) un ressort (38) à l'intérieur du boîtier (4) et sollicitant le corps mobile (32) dans une première direction à distance de la plaque de montage (8) afin de pousser l'élément de tension (48) vers l'intérieur du boîtier (4) dans un mouvement de fermeture de porte ; et
(e) un ensemble d'amortissement hydraulique (30) pour amortir le mouvement longitudinal du corps mobile (32) au moins dans la première direction, l'ensemble d'amortissement hydraulique (30) étant disposé à l'intérieur de l'alésage central (6) du boîtier (4), où l'ensemble d'amortissement hydraulique (300) comprend un piston (72), couplé au boîtier (4) par un arbre de piston (20) et pouvant coulisser dans une chambre remplie de fluide (78) à l'intérieur du corps mobile (32), le piston divise la chambre (78) en deux compartiments (82, 84) et le piston (72) permet le mouvement limité du fluide d'un compartiment à l'autre lorsque le corps mobile (32) est déplacé par rapport au piston (72), et un accumulateur (90) comprenant un corps de mousse compressible disposé dans la chambre remplie de fluide (78) afin d'être compressible par le piston (72) lorsque le corps mobile (32) a été déplacé par le mouvement de l'élément de tension (48) hors du boîtier (4), **caractérisé par** le corps de mousse compressible (90) comprenant un corps allongé ayant un canal (94, 260) dans sa surface circonférentielle externe s'étendant le long de la longueur du corps allongé.

9. Ferme-porte selon la revendication 8, dans lequel le corps en mousse compressible entoure au moins partiellement l'arbre de piston (20), l'arbre de piston (20) étant reçu dans un alésage allongé (92) du corps en mousse compressible, et dans lequel le canal (94, 260) et l'alésage (92) sont solidaires.

10. Ferme-porte selon la revendication 9, dans lequel le canal (94) a des parois latérales (96, 98) dirigées de manière radiale qui sont mutuellement espacées, facultativement les parois latérales (96, 98) dirigées de manière radiale étant mutuellement inclinées selon un angle de 40 +/- 5 degrés.

11. Ferme-porte selon la revendication 9, dans lequel l'accumulateur (90) a une chambre allongée (264) s'étendant le long de la longueur du corps allongé, et une partie de bande arquée (252) au niveau de la surface circonférentielle externe (254) du corps allongé qui s'étend de manière adjacente à la chambre (264), et le canal comprend une fente allongée (260) qui s'étend à travers la partie de bande arquée (252), à partir de la surface circonférentielle externe (254) jusqu'à la chambre (264).

12. Ferme-porte selon la revendication 11, dans lequel la partie de bande arquée (252) a été moulée de manière solidaire conjointement au reste du corps allongé.

13. Ferme-porte comprenant :
(a) un boîtier (4) pour être monté dans une porte, le boîtier (4) ayant une plaque de montage (8) avec une ouverture (58) adjacente à un alésage central (6) du boîtier (4) ;
(b) un élément de tension (48) s'étendant de manière longitudinale à l'intérieur de l'alésage central (6) du boîtier (4) et s'étendant vers l'extérieur du boîtier (4) par l'ouverture (58) afin de définir son extrémité (63) pour être monté sur un cadre de porte ;
(c) un corps mobile (32) à l'intérieur du boîtier (4) et adapté pour le mouvement longitudinal à l'intérieur de l'alésage central (6), le corps mobile (32) étant raccordé à l'élément de tension (48) ;
(d) un ressort (38) à l'intérieur du boîtier (4) et sollicitant le corps mobile (32) dans une première direction à distance de la plaque de montage (8) afin de pousser l'élément de tension (48) vers l'intérieur du boîtier (4) dans un mouvement de fermeture de porte ; et
(e) un ensemble d'amortissement hydraulique (30) pour amortir le mouvement longitudinal du corps mobile (32) au moins dans la première direction, l'ensemble d'amortissement hydraulique (30) étant disposé à l'intérieur de l'alésage central (6) du boîtier (4), dans lequel l'ensemble d'amortissement hydraulique (300) comprend un piston (72) couplé au boîtier (4) par un arbre de piston (20) et pouvant coulisser dans une chambre remplie de fluide (78) à l'intérieur du corps mobile (32), le piston divise la chambre (78) en deux compartiments (82, 84) et le piston (72) permet le mouvement limité du fluide, d'un compartiment à l'autre, lorsque le corps mobile (32) est déplacé par rapport au piston (72) et un accumulateur (90) comprenant un corps de mousse compressible disposé dans la chambre remplie de fluide (78) afin d'être compressible par le piston (72) lorsque le corps mobile (32) a été déplacé par le mouvement de l'élément de tension (48) hors du boîtier (4), **caractérisé par** le corps de mousse compressible comprenant une mousse ayant une densité supérieure à 0,7 g/cm³.

14. Ferme-porte selon la revendication 13, dans lequel la mousse a une densité de 0,7 à 0,8 g/cm³.

15. Ferme-porte selon la revendication 14 ou la revendication 15, dans lequel la mousse est une mousse expansée à alvéoles fermés, facultativement composée de néoprène.
